# FASCICULE DE BREVET EUROPEEN

(11) **EP 3 599 624 B1**
(45) Date de publication et mention de la délivrance du brevet: **20.01.2021**
(21) Numéro de dépôt: 19188263.8
(22) Date de dépôt: 25.07.2019
(51) Int. Cl.: H01F 17/06, H02M 1/40

(54) **NOYAU MAGNÉTIQUE POUR FORMER DES BOBINES**
MAGNETKERN ZUM BILDEN VON SPULEN
MAGNETIC CORE FOR FORMING COILS

(30) Priorité: 26.07.2018 FR 1856964
(43) Date de publication de la demande: 29.01.2020
(73) Titulaire: Valeo Systèmes de Contrôle Moteur, 95800 Cergy Saint-Christophe (FR)
(72) Inventeur: ALLALI, Nicolas, 95800 Cergy St Christophe (FR)
(74) Mandataire: Cardon, Nicolas

(56) Documents cités:
- EP-A1- 1 498 915
- EP-A2- 1 085 649
- US-A- 5 539 369
- US-A1- 2008 037 298

## Description

La présente invention concerne un noyau magnétique apte à coopérer avec au moins un conducteur électrique pour former des bobines. Les bobines formées peuvent être uniquement des bobines du même type, par exemple uniquement des bobines de filtrage différentiel d'interférences électromagnétiques ou uniquement des bobines de filtrage de mode commun d'interférences électromagnétiques. Les bobines formées peuvent en variante comprendre différents types de bobines, par exemple des bobines de filtrage différentiel d'interférences électromagnétiques et des bobines de filtrage de mode commun d'interférences électromagnétiques. Les bobines formées peuvent encore être autres, selon l'invention.

Les bobines formées par la coopération d'un même conducteur électrique avec le noyau sont de préférence en série.

L'invention s'applique par exemple dans le domaine automobile, par exemple au sein d'un convertisseur statique d'un réseau de bord de véhicule automobile. Ce convertisseur statique permet par exemple de convertir un premier niveau de tension, par exemple une tension continue de 12 V, en un deuxième niveau de tension, par exemple une tension continue de 48 V. Ce convertisseur statique peut être utilisé dans un chargeur embarqué (« on board charger » en anglais).

On connaît de la demande US 2008/0037298 un noyau magnétique comprenant un premier tore en un matériau ayant une première perméabilité magnétique, et un deuxième tore en un matériau ayant une deuxième perméabilité magnétique, la première perméabilité magnétique étant supérieure ou égale à trois fois la deuxième perméabilité magnétique.

On connaît de la demande EP 1 498 915 un noyau magnétique monobloc s'étendant de façon continue.

Il existe un besoin pour améliorer encore les noyaux magnétiques destinés à former des bobines.

L'invention a pour but de répondre à ce besoin et elle y parvient, selon l'un de ses aspects, à l'aide d'un noyau magnétique apte à coopérer avec au moins un conducteur électrique pour former des bobines, ce noyau s'étendant axialement et comprenant :
- une première partie axiale dont la coopération avec le conducteur électrique forme une première bobine, et
- une deuxième partie axiale, axialement dans le prolongement de la première partie axiale, et dont la coopération avec le conducteur électrique forme une deuxième bobine,
la deuxième partie axiale étant réalisée d'une seule pièce avec la première partie axiale.

La première bobine et la deuxième bobine sont notamment en série.

L'invention tire parti du fait que lorsqu'un conducteur rectiligne d'axe parallèle à celui du noyau est reçu dans ce noyau, la composante selon cet axe du champ magnétique généré par la coopération entre ce noyau et ce conducteur est nulle. Ainsi, la bobine formée par la première partie axiale peut être découplée, magnétiquement parlant, de la bobine formée par la deuxième partie axiale.

Au moins une découpe peut être formée dans le noyau pour permettre une connexion au conducteur électrique, de manière à délimiter la première bobine de la deuxième bobine.

Selon un premier exemple de mise en œuvre de l'invention, le noyau magnétique ne coopère qu'avec un unique conducteur électrique. Ce dernier est un conducteur rectiligne d'axe parallèle à celui du noyau et ce conducteur est reçu dans le noyau.

La première partie axiale et la deuxième partie axiale peuvent avoir la même géométrie, étant par exemple toutes deux des manchons creux dont l'axe est celui du noyau. Le champ magnétique associé à la première bobine peut circuler dans la paroi du manchon de la première partie axiale tandis que le champ magnétique associé à la deuxième bobine peut circuler dans la paroi du manchon de la deuxième partie axiale.

Au sens de la présente demande :
- « axialement » signifie « parallèlement à l'axe du noyau magnétique »,
- « circonférentiellement » signifie « autour de l'axe du noyau magnétique »,
- « radialement » signifie « dans un plan perpendiculaire à l'axe du noyau magnétique, le long d'une droite coupant cet axe », et
- « couplé », respectivement « découplé », signifie « couplé magnétiquement », respectivement « découplé magnétiquement ».

Chaque manchon a par exemple le même rayon.

Selon ce premier exemple de mise en œuvre, une découpe s'étendant circonférentiellement sur moins du pourtour du noyau peut être présente et délimiter la première partie axiale de la deuxième partie axiale du noyau. Cette découpe s'étend par exemple sur un angle mesuré depuis l'axe du noyau qui est compris entre 10° et 60°, par exemple. Chaque découpe s'étend par exemple sur une dimension axiale comprise entre 5% et 20% de la dimension axiale de la première partie axiale.

Le cas échéant, plusieurs découpes, de forme identique ou non, existent pour délimiter la première partie axiale de la deuxième partie axiale, et ces découpes sont réparties, de façon uniforme ou non, autour de l'axe du noyau. Selon ce premier exemple de mise en œuvre, une unique découpe peut être ménagée.

La présence d'une ou plusieurs découpes peut permettre de réduire l'apparition d'inductances parasites. Une découpe peut permettre une connexion du conducteur électrique à un condensateur, de manière à former un filtre LC par l'association entre une des bobines et ce condensateur.

Une fente axiale peut être ménagée tout le long de la première partie axiale. Cette fente axiale peut former un entrefer pour le champ magnétique associé à la première bobine. La première partie axiale comprend par exemple une unique fente axiale.

Une fente axiale peut être ménagée tout le long de la deuxième partie axiale. Cette fente axiale peut former un entrefer pour le champ magnétique associé à la deuxième bobine. La deuxième partie axiale comprend par exemple une unique fente axiale.

Lorsque la première partie axiale, respectivement la deuxième partie axiale, est un manchon creux, la fente axiale peut déboucher radialement à l'intérieur et à l'extérieur du manchon, étant alors traversante, radialement parlant.

Le cas échéant, la fente axiale ménagée dans la première partie axiale communique avec une découpe et cette dernière communique avec la fente axiale ménagée dans la deuxième partie axiale. Une discontinuité de matière peut ainsi être ménagée sur toute la longueur du noyau, ce vide étant alors formé par la réunion de la fente axiale de la première partie axiale, d'une découpe, et de la fente axiale de la deuxième partie axiale.

Selon ce premier exemple de mise en œuvre, la coopération du noyau et du conducteur électrique rectiligne peut permettre d'obtenir une première bobine montée en série avec la deuxième bobine, ces deux bobines étant découplées magnétiquement. Ces deux bobines peuvent former des bobines de filtrage différentiel d'interférences électromagnétiques. La connexion de chaque bobine à un condensateur peut permettre la réalisation d'un filtre LC d'ordre 2.

Selon un deuxième exemple de mise en œuvre de l'invention, le noyau magnétique est apte à coopérer avec au moins deux conducteurs électriques pour former des bobines. Chacun de ces conducteurs électriques peut être rectiligne d'axe parallèle à celui du noyau, et chacun de ces conducteurs peut être reçu dans le noyau. Selon ce deuxième exemple de mise en œuvre, la coopération de la première partie axiale avec chaque conducteur électrique forme une première bobine, cette première partie axiale définissant pour le champ magnétique associé à chaque première bobine un chemin permettant un découplage magnétique de ces premières bobines, ce chemin comprenant :
- une portion commune, apte à être empruntée par le champ magnétique associé à au moins une autre première bobine, cette portion commune étant dépourvue d'entrefer, et
- une portion propre à cette première bobine, le champ magnétique empruntant cette portion propre traversant au moins un entrefer propre à cette première bobine.

Toujours selon le deuxième exemple de mise en œuvre, la coopération de la deuxième partie axiale avec chaque conducteur électrique forme une deuxième bobine, cette deuxième partie axiale définissant pour le champ magnétique associé à chaque deuxième bobine un chemin permettant un couplage magnétique de ces deuxièmes bobines, ce chemin étant en totalité également emprunté par le champ magnétique associé à au moins une autre deuxième bobine.

Autrement dit, selon ce deuxième exemple de mise en œuvre, il existe autant de premières bobines qu'il existe de conducteurs électriques et ces premières bobines sont découplées entre elles, tandis qu'il existe autant de deuxièmes bobines qu'il existe de conducteurs électriques et ces deuxièmes bobines sont couplées entre elles. La présence d'un entrefer propre à chaque première bobine permet d'assurer le découplage entre ces dernières.

Selon ce deuxième exemple de mise en œuvre, la première bobine et la deuxième bobine définies par la coopération d'un conducteur électrique donné avec le noyau magnétique sont en série et les différents conducteurs électriques sont montés en parallèle.

Selon le deuxième exemple de mise en œuvre, la première partie axiale peut comprendre une enveloppe externe, une jambe interne et des bras de liaison de la jambe interne et de l'enveloppe externe. Chaque bras de liaison peut s'étendre radialement entre la jambe interne jusqu'à l'enveloppe externe.

L'extrémité axiale de l'enveloppe externe de la première partie axiale en regard de la deuxième partie axiale peut comprendre une pluralité de découpes, chaque découpe s'étendant circonférentiellement et étant ménagée sur moins de la dimension axiale de l'enveloppe externe. Chaque découpe s'étend par exemple sur un angle mesuré depuis l'axe du noyau qui est compris entre 10° et 60°. Chaque découpe s'étend par exemple sur une dimension axiale comprise entre 5 et 20 % de la dimension axiale de la première partie axiale.

Le cas échéant, plusieurs découpes, de forme identique ou non existent, et ces découpes sont réparties, de façon uniforme ou non, autour de l'axe du noyau. La présence d'une ou plusieurs découpes peut permettre de réduire l'apparition d'inductances parasites. Une découpe peut permettre une connexion d'une extrémité d'une des premières bobines à un condensateur, de manière à former via cette première bobine et ce condensateur un filtre LC. La présence d'une découpe donnée peut permettre de découpler la première bobine formée par la coopération entre la première partie axiale et un conducteur électrique de la deuxième bobine formée par la coopération entre la deuxième partie axiale et ce même conducteur électrique.

Une pluralité de fentes axiales peut être ménagée dans l'enveloppe externe pour définir les entrefers propres aux premières bobines. Chaque fente axiale peut déboucher radialement de part et d'autre de l'enveloppe, étant alors traversantes radialement parlant.

Plusieurs fentes axiales peuvent être ménagées et plusieurs découples peuvent être ménagées, de sorte que chaque fente peut communiquer avec une découpe, notamment pour ménager une discontinuité de matière dans l'enveloppe externe sur toute la dimension axiale de cette enveloppe externe.

Toutes les premières bobines peuvent avoir leur champ magnétique respectif associé ayant au moins une ligne de champ circulant dans la jambe interne, deux premières bobines peuvent avoir leur champ magnétique respectif associé ayant au moins une ligne de champ circulant dans un même bras de liaison, et chaque zone de l'enveloppe externe délimitée entre deux bras de liaison successifs est dédiée à une ou plusieurs lignes de champ du champ magnétique associé à une seule première bobine.

Autrement dit, lors de son parcours dans le noyau, le champ magnétique associé à une première bobine emprunte :
- la jambe interne de la première partie axiale, qui est également empruntée par le parcours dans le noyau magnétique de chaque champ magnétique associé à une première bobine,
- un bras de liaison, qui est également emprunté par le parcours dans le noyau magnétique du champ magnétique associé à une autre première bobine, et
- une zone de l'enveloppe externe comprenant un entrefer, cette zone de l'enveloppe s'étendant depuis le bras de liaison jusqu'à un autre bras de liaison consécutif, et cet autre bras de liaison permettant au champ magnétique de regagner la jambe interne. Cet autre bras de liaison est également emprunté par le parcours dans le noyau magnétique du champ magnétique associé à une première bobine différente, cette première bobine différente étant l'autre première bobine mentionnée précédemment en rapport avec le précédent bras de liaison dans le cas où le noyau coopère avec deux conducteurs électriques uniquement.

Toujours selon le deuxième exemple de mise en œuvre, la première partie axiale peut former un cylindre de premier rayon et dont l'axe est celui du noyau, l'enveloppe extérieure définissant la surface extérieure de ce cylindre, la jambe intérieure s'étendant selon l'axe de ce cylindre, et chaque bras de liaison étant orienté radialement par rapport à cet axe du cylindre.

Lorsque trois conducteurs rectilignes coopèrent avec le noyau, chacun d'entre eux peut être reçu dans un logement propre ménagé dans la première portion, ce logement étant radialement délimité par la jambe interne de la première partie axiale d'une part et par une zone de l'enveloppe externe d'autre part, et ce logement étant délimité circonférentiellement entre deux bras de liaison successifs.

Selon le deuxième exemple de mise en œuvre, la deuxième partie axiale peut être constituée par un manchon creux. A la différence de la première partie axiale, le manchon creux peut être dépourvu de jambe interne et de bras de liaison. Le manchon creux définit alors intérieurement un unique logement dans lequel tous les conducteurs électriques coopérant avec cette deuxième partie axiale sont reçus.

Le manchon creux peut constituer le seul trajet dans le noyau de chaque champ magnétique au niveau de la deuxième partie axiale. Autrement dit, la coopération avec le manchon creux d'un conducteur électrique définit une deuxième bobine avec un champ magnétique associé dont le trajet dans le noyau circule dans la paroi du manchon creux, et la coopération avec ce manchon creux d'un autre conducteur électrique définit une autre deuxième bobine avec un autre champ magnétique associé dont le trajet dans le noyau emprunte exactement le même chemin que le champ magnétique précédemment associé, dans la paroi du manchon creux. Les champs magnétiques empruntant le même trajet, ces deuxièmes bobines sont couplées.

Le manchon creux peut s'étendre continûment sans découpe axiale.

Le manchon creux est par exemple un cylindre de deuxième rayon et dont l'axe est l'axe du noyau.

Selon une réalisation concrète de ce deuxième exemple de mise en œuvre, la première partie axiale a un premier rayon supérieur au deuxième rayon de la deuxième partie axiale, le rapport entre le premier rayon et le deuxième rayon étant compris entre 1 et 10. L'inverse est cependant possible. Chacun de ces rayons peut être compris entre 0,1 mm et 200 mm.

Le rayon de la deuxième partie axiale peut être choisi pour permettre le passage de cette deuxième partie axiale à l'intérieur d'un trou ménagé dans une carte de circuit imprimé. Le décrochement radial formé par la différence entre le premier et le deuxième rayon peut former une surface d'appui du noyau magnétique sur la carte de circuit imprimé. Le noyau est par exemple fixé, notamment par brasure ou encastrement, sur le circuit imprimé.

Dans tout ce qui précède, le noyau magnétique peut être réalisé en ferrite. En variante, ce noyau pourrait être réalisé en poudre de fer, ou en nanocristallin.

L'invention a encore pour objet, selon un autre de ses aspects, un ensemble comprenant :
- le noyau tel que défini ci-dessus et,
- au moins un conducteur électrique, notamment au moins deux conducteurs électriques, le conducteur électrique définissant avec la première partie axiale du noyau une première bobine, et avec la deuxième partie axiale du noyau une deuxième bobine, le conducteur électrique s'étendant de manière rectiligne selon l'axe du noyau

Lorsque plusieurs conducteurs électriques sont reçus dans le noyau, il peut s'agir de conducteurs électriques distincts, montés en parallèle électriquement parlant. Tous ces conducteurs électriques peuvent s'étendre de manière rectiligne selon l'axe du noyau.

En variante, lorsque plusieurs conducteurs électriques sont reçus dans le noyau, il peut s'agir de différentes portions successives d'un même conducteur, chacune de ces portions s'étendant de manière rectiligne dans le noyau selon l'axe de ce dernier, et étant connectées entre elles à l'extérieur du noyau.

Chaque conducteur électrique peut être parcouru par un courant électrique et la somme sur l'ensemble de ces conducteurs des valeurs moyennes de ces courants électriques peut être nulle.

L'ensemble peut former un filtre d'interférences électromagnétiques.

L'ensemble peut comprendre exactement trois conducteurs électriques. Le premier de ces trois conducteurs électriques peut avoir un premier potentiel électrique, notamment un potentiel de 48 V, le deuxième de ces trois conducteurs électriques peut avoir un deuxième potentiel électrique, notamment un potentiel de 12 V, et le troisième de ces trois conducteurs électriques peut avoir un troisième potentiel électrique, formant notamment une masse électrique ou la terre.

Lorsque l'ensemble forme un filtre d'interférences électromagnétiques, chaque première bobine peut être associée à un condensateur X de manière à former un filtre différentiel d'ordre 2 et/ou chaque deuxième bobine peut être associée à un condensateur Y de manière à former un filtre de mode commun d'ordre 2.

L'invention a encore pour objet, selon un autre de ses aspects, un convertisseur statique, notamment un convertisseur de tension continu/continu, de préférence un convertisseur 12 V / 48 V, comprenant :
- une pluralité de cellules de commutation, permettant la conversion de tension entre un premier niveau de tension et un deuxième niveau de tension,
- un connecteur électrique pour le raccordement du convertisseur à un réseau de tension au premier niveau de tension et à un réseau de tension au deuxième niveau de tension, le connecteur comprenant trois contacts, de manière à ce que la différence de potentiel électrique entre le premier et le troisième contact définisse le premier niveau de tension et à ce que la différence de potentiel électrique entre le deuxième et le troisième contact définisse le deuxième niveau de tension, et
- le filtre d'interférences électromagnétiques défini précédemment, ce filtre étant interposé entre les cellules de commutation d'une part et le connecteur électrique d'autre part.

Le filtre permet de réduire de façon efficace et peu coûteuse les interférences électromagnétiques, afin de ne pas polluer la tension sur chaque réseau de tension.

Le filtre selon l'invention peut encore s'appliquer dans des onduleurs/redresseurs ou dans des compresseurs.

L'invention pourra être mieux comprise à la lecture qui va suivre d'exemples non limitatifs de mise en œuvre de celle-ci et à l'examen du dessin annexé sur lequel :
- la figure 1 représente de façon schématique un noyau magnétique et un seul conducteur selon un premier exemple de mise en œuvre de l'invention,
- la figure 2 représente le circuit électrique équivalent de la figure 1,
- la figure 3 représente de façon similaire à la figure 1 un noyau magnétique et trois conducteurs selon un deuxième exemple de mise en œuvre de l'invention,
- la figure 4 représente de façon similaire à la figure 2, le circuit électrique équivalent de la figure 3,
- les figures 5 à 7 sont différentes vues du noyau magnétique de la figure 3, et
- les figures 8 et 9 sont similaires aux figures 3 et 4 mais concernent une application spécifique du deuxième exemple de mise en œuvre à la réalisation d'un filtre d'interférences électromagnétiques intégré à un convertisseur de tension continu/continu.

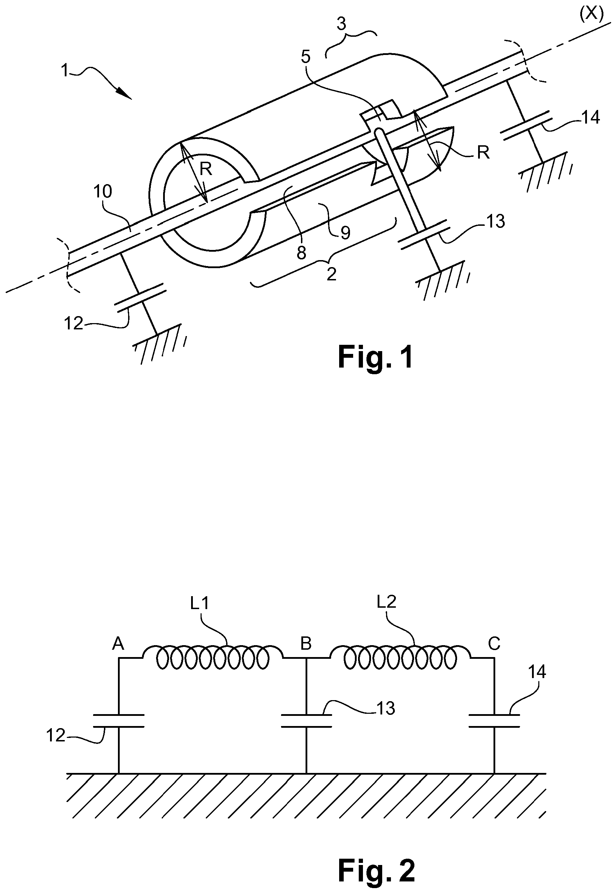

On a représenté à la figure 1 un noyau 1 selon un premier exemple de mise en œuvre de l'invention. Ce noyau 1 présente un axe longitudinal X et comprend deux parties axiales successives, à savoir une première partie axiale 2 et une deuxième partie axiale 3, disposées dans le prolongement l'une de l'autre. Le noyau 1 est ici monobloc, de sorte que la première partie axiale 2 et la deuxième partie axiale 3 sont réalisées à partir de la même pièce. La délimitation au sein du noyau 1 entre la première partie axiale 2 et la deuxième partie axiale 3 s'effectue au moyen d'une découpe 5 s'étendant circonférentiellement.

On constate sur la figure 1 que le noyau 1 a une forme de manchon creux et que cette forme est identique tout le long de l'axe X. Autrement dit, dans l'exemple considéré, la première partie axiale 2 est un manchon creux de rayon externe R et la deuxième partie axiale 3 est un manchon creux de même rayon externe R.

On constate encore sur la figure 1 qu'une fente axiale 8 peut être ménagée dans la paroi 9 du noyau 1, sur toute la longueur de ce dernier. Cette fente axiale est dans l'exemple considéré également radialement traversante pour la paroi 9.

Dans l'exemple représenté sur la figure 1, la découpe 5 s'étend circonférentiellement de part et d'autre de la fente axiale 8

Le manchon est creux selon ce premier exemple de mise en œuvre, c'est-à-dire que le manchon définit en son centre un logement recevant un conducteur électrique 10. Selon ce premier exemple de mise en œuvre, le conducteur électrique 10 est unique et il est rectiligne d'axe confondu avec l'axe X.

Ce conducteur électrique coopère avec le noyau 1 pour définir deux bobines en série, à savoir une première bobine L1 et une deuxième bobine L2. La première bobine L1 est formée par la coopération entre le conducteur électrique 10 et la première partie 2 du noyau 1, tandis que la deuxième bobine L2 est formée par la coopération entre le conducteur électrique 10 et la deuxième partie 3 du noyau 1. Chaque bobine L1 et L2 forme ici une bobine de filtrage différentiel.

Comme représenté schématiquement sur la figure 1 :
- un condensateur 12 peut être branché au conducteur électrique 1, en entrée du noyau 1 en un point référencé A,
- un condensateur 13 peut être branché au conducteur électrique 1, au niveau de la transition entre la première partie axiale 2 et la deuxième partie axiale 3 en un point référencé B, le branchement à ce condensateur se faisant via la découpe 5, et
- un condensateur 14 peut être branché au conducteur électrique 1, en sortie du noyau 1 en un point référencé C.

L'association entre la première bobine L1 et le condensateur 13 forme un filtre LC tandis que l'association entre la deuxième bobine L2 et le condensateur 14 forme un autre filtre LC.

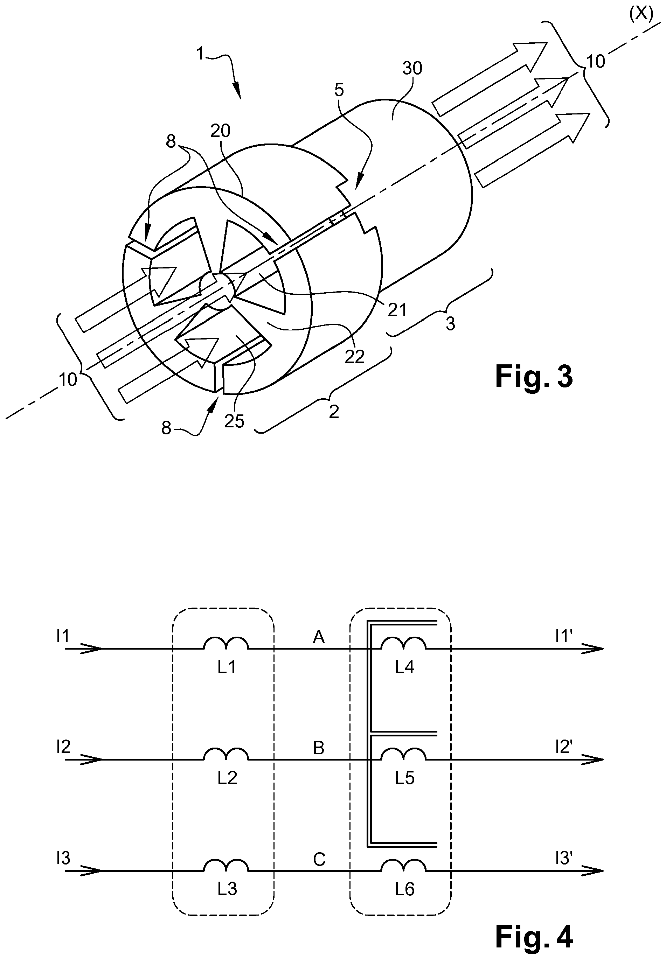

On va maintenant décrire en référence aux figures 3 à 9 des noyaux magnétiques 1 selon un deuxième exemple de mise en œuvre de l'invention.

Selon le deuxième exemple en œuvre de l'invention, la première partie axiale 2 et la deuxième partie axiale 3 ont des géométries différentes.

Dans les exemples des figures 3 à 9, la première partie axiale 2 comprend une enveloppe externe 20, une jambe interne 21 et des bras de liaison 22 de la jambe interne 21 et de l'enveloppe externe 20. La première partie axiale 2 a ici une forme cylindrique, de sorte que chaque bras de liaison 22 s'étend radialement entre la jambe interne 21 jusqu'à l'enveloppe externe 20.

On constate encore, par exemple sur la figure 3, que l'extrémité axiale de l'enveloppe externe 20 en regard de la deuxième partie axiale 3 peut comprendre une pluralité de découpes 5. Similairement à ce qui est représenté sur la figure 1, chaque découpe 5 peut s'étendre circonférentiellement et être ménagée sur moins de la dimension axiale de l'enveloppe externe 20. Chaque découpe 5 s'étend par exemple sur une dimension axiale comprise entre 5 et 20% de la dimension axiale de la première partie axiale 2.

Sur la figure 3, on constate encore que plusieurs fentes axiales 8 peuvent être ménagée à travers l'enveloppe externe 20. Comme on le verra par la suite, chaque fente 8 définit un entrefer pour une bobine formée par la coopération entre un conducteur électrique 10 et la première partie axiale 2. Similairement à ce qui a été décrit en référence au premier exemple de mise en œuvre, chaque fente axiale 8 débouche radialement de part et d'autre de l'enveloppe externe 20.

On constate notamment que chaque fente axiale 8 communique avec une découpe 5, de manière à ménager une discontinuité de matière dans l'enveloppe externe 20 sur toute la dimension axiale de cette enveloppe externe.

La première partie axiale 2 est ici cylindrique de premier rayon externe R1 et d'axe confondu avec celui du noyau.

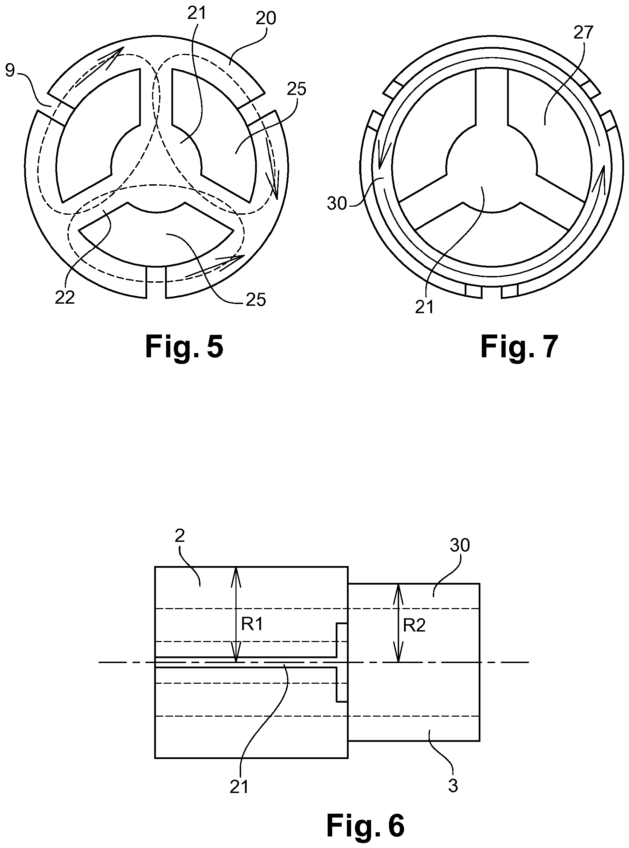

Comme représenté sur les figures 3 et 5, la figure 5 étant une vue de face du noyau de la figure 3, lorsque l'on regarde la première partie axiale 2, cette première partie 2 définit par exemple trois logements 25, chaque logement 25 étant radialement délimité par la jambe interne 21 d'une part et par une zone de l'enveloppe externe 20 d'autre part, et ce logement étant délimité circonférentiellement entre deux bras de liaison 22 successifs. Chaque logement 25 est dédié à un conducteur électrique 10 coopérant avec le noyau magnétique 1, comme on le verra par la suite.

Toujours selon ce deuxième exemple de mise en œuvre, la deuxième partie axiale 3 est constituée par un manchon creux 30, comme cela est notamment visible sur la figure 7 qui est une vue de face du noyau 1 de la figure 3, lorsque l'on regarde la deuxième partie axiale 3. Le manchon creux 30 est dépourvu de jambe interne et de bras de liaison. Le manchon creux définit intérieurement un unique logement 27 dans lequel tous les conducteurs électriques 10 coopérant avec cette deuxième partie axiale sont reçus, comme on le verra par la suite. Le manchon creux 30 est ici dépourvu de toute fente axiale.

Le manchon creux 30 de la deuxième partie axiale 3 est ici cylindrique d'axe étant l'axe du noyau 1 et de deuxième rayon R2. Comme on peut le voir sur la figure 6 par exemple, qui est une vue de côté du noyau 1 de la figure 3, R1 est plus grand que R2, de sorte que la première partie axiale 2 fait saillie radialement par rapport à la deuxième partie axiale 3.

Dans l'exemple considéré, trois conducteurs électriques 10, qui sont montés en parallèle, sont reçus à l'intérieur du noyau magnétique 1. Ces conducteurs électriques 10 sont rectilignes d'axe parallèle à l'axe X.

Au niveau de la première partie axiale 2, chacun de ces conducteurs électriques 10 est reçu dans un logement 25 dédié à ce conducteur.

La coopération entre chaque conducteur électrique 10 et la première partie axiale 2 définit une première bobine respectivement Ll, L2 et L3. La sortie de chacune de ces bobines Ll, L2 et L3 en direction de la deuxième partie axiale 3 est désignée par les points de référence A, B et C respectivement.

Comme on peut le voir sur la figure 5, chaque bobine présente un champ magnétique associé et chacun de ces champs magnétiques emprunte le parcours suivant dans la première partie axiale :
- la jambe interne 21,
- un bras de liaison 22,
- la zone de l'enveloppe externe 20 disposée entre le bras de liaison 22 et le bras de liaison suivant, zone dans laquelle un entrefer propre à ce champ est ménagé par la fente axiale 8, et
- ce bras de liaison suivant 22.

La jambe interne 21 est ainsi partagée entre tous les champs magnétiques tandis que deux champs magnétiques associés respectivement à des premières bobines différentes partagent un bras de liaison 22.

La zone de l'enveloppe externe 20 avec l'entrefer disposée entre deux bras de liaison successifs 22 est dédiée au champ magnétique d'une seule première bobine.

Les premières bobines L1 à L3 sont découplées magnétiquement, formant ici trois bobines de filtrage différentiel.

A la différence de la première partie axiale 2, la deuxième partie axiale 3 est évidée et les trois conducteurs électriques 10 sont tous reçus dans le logement 27. La coopération entre chaque conducteur électrique 10 et la deuxième partie axiale 3 forme respectivement une deuxième bobine L4, L5 et L6.

Comme on peut le voir sur la figure 7, tous les champs magnétiques partagent le même parcours dans le noyau magnétique 1 au niveau de la deuxième partie axiale 3. Ce parcours s'effectue dans la paroi du manchon creux 30. Ces deuxièmes bobines L4, L5 et L6 sont donc couplées, fournissant des bobines de filtrage de mode commun.

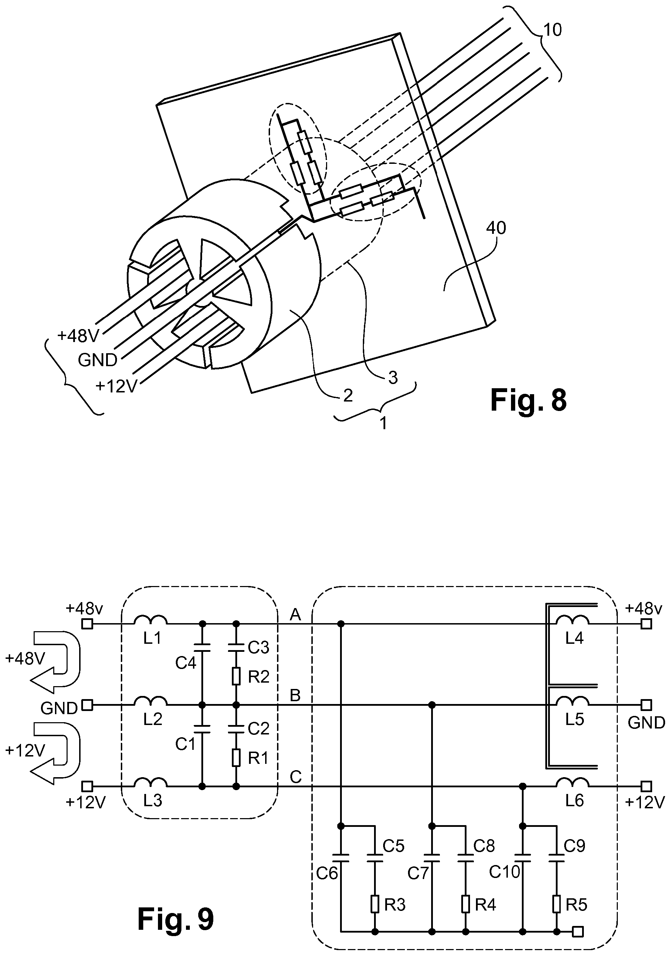

Les figures 8 et 9 concernent une application particulière du noyau magnétique des figures 3 à 7 à un filtrage d'interférences électromagnétiques dans un convertisseur de tension 12V / 48 V. Ce convertisseur comprend :
- des cellules de commutation non représentées, permettant la conversion de tension 12V / 48V, et
- un connecteur électrique permettant de raccorder ces cellules de commutation au réseau 12 V d'une part et au réseau 48 V d'autre part.

Trois conducteurs électriques 10 sont présents : un premier conducteur référencé +48 V sur les figures 8 et 9, un deuxième conducteur référencé GND sur les figures 8 et 9 et formant une masse électrique, et un troisième conducteur référencé +12V sur les figures 8 et 9.

Le noyau magnétique 1 est ici monté sur une carte de circuit imprimé 40, la deuxième partie axiale 3 étant introduite dans un trou ménagé dans cette carte de circuit imprimé 40 tandis que la saillie radiale de la première partie axiale 2 par rapport à la deuxième partie axiale 3 forme une surface d'appui sur cette carte de circuit imprimé 40. Des capacités X et des capacités Y sont visibles sur les figures 8 et 9, respectivement pour former des filtres LC avec chaque première bobine et chaque deuxième bobine.

Grâce au filtre obtenu à l'aide du noyau 1, on obtient au niveau du connecteur du convertisseur un signal de tension 12 V et un signal de tension 48 V dont ont été filtrées les perturbations liées aux interférences électromagnétiques.

L'invention n'est pas limitée aux exemples qui viennent d'être décrits.

D'autres applications du noyau selon l'invention sont possibles, par exemple pour un convertisseur de tension continue/continue ou pour un onduleur/redresseur.

## Revendications

1. Noyau magnétique (1) apte à coopérer avec au moins un conducteur électrique (10) pour former des bobines, ce noyau (1) s'étendant axialement et comprenant :
- une première partie axiale (2) dont la coopération avec le conducteur électrique (10) forme une première bobine, et
- une deuxième partie axiale (3), axialement dans le prolongement de la première partie axiale (2) et dont la coopération avec le conducteur électrique (10) forme une deuxième bobine,
la deuxième partie axiale (3) étant réalisée d'une seule pièce avec la première partie axiale (2), la première bobine et la deuxième bobine étant notamment en série, **caractérisé par**
au moins une découpe (5) étant formée dans le noyau pour permettre une connexion au conducteur électrique (10), de manière à délimiter la première bobine de la deuxième bobine.

2. Noyau selon la revendication 1, étant apte à coopérer avec au moins deux conducteurs électriques pour former des bobines,
la coopération de la première partie axiale (2) avec chaque conducteur électrique (10) formant une première bobine, cette première partie axiale (2) définissant pour le champ magnétique associé à chaque première bobine un chemin permettant un découplage magnétique de ces premières bobines, ce chemin comprenant :
- une portion commune (20, 21), apte à être empruntée par le champ magnétique associé à au moins une autre première bobine, cette portion commune étant dépourvue d'entrefer, et
- une portion propre (22) à cette première bobine, le champ magnétique empruntant cette portion propre traversant au moins un entrefer propre à cette première bobine,
la coopération de la deuxième partie axiale (3) avec chaque conducteur électrique (10) formant une deuxième bobine, cette deuxième partie définissant pour le champ magnétique associé à chaque bobine un chemin permettant un couplage magnétique de ces deuxièmes bobines, ce chemin étant en totalité également emprunté par le champ magnétique associé à au moins une autre bobine.

3. Noyau magnétique selon la revendication 2, la première partie axiale (2) comprenant une enveloppe externe (20), une jambe interne (21) et des bras de liaison (22) de lajambe interne (21) et de l'enveloppe externe (20).

4. Noyau selon la revendication 3, l'extrémité axiale de l'enveloppe externe (20) en regard de la deuxième partie axiale (3) comprenant une pluralité de découpes (5), chaque découpe (5) s'étendant circonféreniellement et étant ménagée sur moins de la dimension axiale de l'enveloppe externe (20).

5. Noyau magnétique selon la revendication 3 ou 4, une pluralité de fentes axiales (8) étant ménagée à travers dans l'enveloppe externe (20) pour définir les entrefers propres aux bobines.

6. Noyau selon les revendications 4 et 5, chaque fente (8) communiquant avec une découpe (5), notamment pour ménager une discontinuité de matière dans l'enveloppe externe sur toute la dimension axiale de cette enveloppe externe (20).

7. Noyau selon l'une quelconque des revendications 3 à 6, toutes les premières bobines ayant leur champ magnétique respectif associé ayant au moins une ligne de champ circulant dans la jambe interne (21), deux premières bobines ayant leur champ magnétique respectif associé ayant au moins une ligne de champ circulant dans un même bras de liaison (22), et chaque zone de l'enveloppe externe (20) délimitée entre deux bras de liaison (22) successifs étant dédiée à une ou plusieurs lignes de champ du champ magnétique associé à une seule première bobine.

8. Noyau selon l'une quelconque des revendications 3 à 7, la première partie axiale (2) formant un cylindre de premier rayon (R1) et dont l'axe est celui du noyau (X), l'enveloppe extérieure (20) définissant la surface extérieure de ce cylindre, la jambe intérieure (21) s'étendant selon l'axe de ce cylindre, et chaque bras de liaison (22) étant orienté radialement par rapport à cet axe du cylindre.

9. Noyau selon l'une quelconque des revendications précédentes, la deuxième partie axiale (3) étant constituée par un manchon creux (30).

10. Noyau selon la revendication 9, le manchon creux (30) s'étendant continûment sans découpe autour de l'axe (X) du noyau.

11. Noyau selon la revendication 9 ou 10, le manchon creux (30) étant un cylindre de deuxième rayon (R2) et dont l'axe est l'axe (X) du noyau.

12. Noyau selon les revendications 8 et 11, la première partie axiale (2) ayant un premier rayon (R1) supérieur au deuxième rayon (R2) de la deuxième partie axiale (3), le rapport entre le premier rayon et le deuxième rayon étant compris entre 1 et 10.

13. Ensemble, notamment filtre d'interférences électromagnétiques, comprenant :
- le noyau (1) selon l'une quelconque des revendications précédentes, et
- au moins un conducteur électrique (10), notamment au moins deux conducteurs électriques, le conducteur électrique (10) définissant avec la première partie axiale (2) du noyau une première bobine, et avec la deuxième partie axiale (3) du noyau une deuxième bobine, la première et la deuxième bobine étant notamment en série.

14. Ensemble selon la revendication 13, comprenant exactement trois conducteurs électriques (10), le premier de ces trois conducteurs électriques (10) ayant un premier potentiel électrique, notamment un potentiel de 48 V, le deuxième de ces trois conducteurs électriques (10) ayant un deuxième potentiel électrique, notamment un potentiel de 12 V, et le troisième de ces trois conducteurs électriques (10) ayant un troisième potentiel électrique, formant notamment une masse électrique.

15. Convertisseur de tension continu/continu, notamment convertisseur 12 V / 48 V, comprenant :
- une pluralité de cellules de commutation, permettant la conversion de tension entre un premier niveau de tension et un deuxième niveau de tension,
- un connecteur électrique pour le raccordement du convertisseur à un réseau de tension au premier niveau de tension et à un réseau de tension au deuxième niveau de tension, le connecteur comprenant trois contacts, de manière à ce que la différence de potentiel électrique entre le premier et le troisième contact définisse le premier niveau de tension et à ce que la différence de potentiel électrique entre le deuxième et le troisième contact définisse le deuxième niveau de tension, et
- l'ensemble selon les revendications 13 et 14, cet ensemble formant un filtre d'interférences électromagnétiques interposé entre les cellules de commutation d'une part et le connecteur électrique d'autre part.

## Patentansprüche

1. Magnetkern (1), der dazu fähig ist, mit mindestens einem elektrischen Leiter (10) zusammenzuwirken, um Spulen zu bilden, wobei sich dieser Kern (1) axial erstreckt und Folgendes beinhaltet:
- einen ersten axialen Teil (2), dessen Zusammenwirken mit dem elektrischen Leiter (10) eine erste Spule bildet, und
- einen zweiten axialen Teil (3), der sich axial in der Verlängerung des ersten axialen Teils (2) befindet und dessen Zusammenwirken mit dem elektrischen Leiter (10) eine zweite Spule bildet,
wobei der zweite axiale Teil (3) mit dem ersten axialen Teil (2) einstückig ausgebildet ist, wobei die erste Spule und die zweite Spule insbesondere in Reihe angeordnet sind,
**gekennzeichnet durch** mindestens einen in dem Kern gebildeten Ausschnitt (5), um eine Verbindung mit dem elektrischen Leiter (10) zu ermöglichen, sodass die erste Spule von der zweiten Spule abgegrenzt wird.

2. Kern nach Anspruch 1, der dazu fähig ist, mit mindestens zwei elektrischen Leitern zusammenzuwirken, um Spulen zu bilden,
wobei das Zusammenwirken des ersten axialen Teils (2) mit jedem elektrischen Leiter (10) eine erste Spule bildet, wobei dieser erste axiale Teil (2) für das mit jeder ersten Spule assoziierte Magnetfeld einen Weg definiert, der ein magnetisches Entkoppeln dieser ersten Spulen ermöglicht, wobei dieser Weg Folgendes beinhaltet:
- einen gemeinsamen Abschnitt (20, 21), der fähig ist, von dem mit mindestens einer anderen ersten Spule assoziierten Magnetfeld benutzt zu werden, wobei dieser gemeinsame Abschnitt über keinen Luftspalt verfügt, und
- einen dieser ersten Spule eigenen Abschnitt (22), wobei das Magnetfeld, das diesen eigenen Abschnitt benutzt, mindestens einen dieser ersten Spule eigenen Luftspalt durchquert,
wobei das Zusammenwirken des zweiten axialen Teils (3) mit jedem elektrischen Leiter (10) eine zweite Spule bildet, wobei dieser zweite Teil für das mit jeder Spule assoziierte Magnetfeld einen Weg definiert, der ein magnetisches Koppeln dieser zweiten Spulen ermöglicht, wobei dieser Weg in seiner Gesamtheit auch von dem mit mindestens einer anderen Spule assoziierten Magnetfeld benutzt wird.

3. Magnetkern nach Anspruch 2, wobei der erste axiale Teil (2) eine Außenhülle (20), eine Innenstrebe (21) und Arme zum Verbinden (22) der Innenstrebe (21) und der Außenhülle (20) beinhaltet.

4. Kern nach Anspruch 3, wobei das axiale Ende der Außenhülle (20) gegenüber dem zweiten axialen Teil (3) eine Vielzahl von Ausschnitten (5) beinhaltet, wobei sich jeder Ausschnitt (5) um den Umfang erstreckt und über weniger als die axiale Abmessung der Außenhülle (20) ausgeformt ist.

5. Magnetkern nach Anspruch 3 oder 4, wobei eine Vielzahl von axialen Schlitzen (8) durch die Außenhülle (20) durchgehend ausgeformt ist, um die den Spulen eigenen Luftspalte zu definieren.

6. Kern nach den Ansprüchen 4 und 5, wobei jeder Schlitz (8) mit einem Ausschnitt (5) kommuniziert, um insbesondere eine Materiallücke in der Außenhülle über die gesamte axiale Abmessung dieser Außenhülle (20) auszuformen.

7. Kern nach einem der Ansprüche 3 bis 6, wobei alle ersten Spulen ihr assoziiertes jeweiliges Magnetfeld aufweisen, das mindestens eine Feldlinie aufweist, die in der Innenstrebe (21) verläuft, wobei zwei erste Spulen ihr assoziiertes jeweiliges Magnetfeld aufweisen, das mindestens eine Feldlinie aufweist, die in einem gleichen Verbindungsarm (22) verläuft, und wobei jeder Bereich der Außenhülle (20), der zwischen zwei aufeinanderfolgenden Verbindungsarmen (22) abgegrenzt ist, für eine oder mehrere Feldlinien des mit einer einzigen ersten Spule assoziierten Magnetfelds bestimmt ist.

8. Kern nach einem der Ansprüche 3 bis 7, wobei der erste axiale Teil (2) einen Zylinder mit einem ersten Radius (R1) bildet und dessen Achse diejenige des Kerns (X) ist, wobei die Außenhülle (20) die äußere Oberfläche dieses Zylinders definiert, wobei sich die Innenstrebe (21) entlang der Achse dieses Zylinders erstreckt und wobei jeder Verbindungsarm (22) mit Bezug auf diese Achse des Zylinders radial ausgerichtet ist.

9. Kern nach einem der vorhergehenden Ansprüche, wobei der zweite axiale Teil (3) aus einer hohlen Hülse (30) besteht.

10. Kern nach Anspruch 9, wobei sich die hohle Hülse (30) durchgehend ohne Ausschnitt um die Achse (X) des Kerns erstreckt.

11. Kern nach Anspruch 9 oder 10, wobei die hohle Hülse (30) ein Zylinder mit einem zweiten Radius (R2) ist und dessen Achse die Achse (X) des Kerns ist.

12. Kern nach den Ansprüchen 8 und 11, wobei der erste axiale Teil (2) einen ersten Radius (R1) aufweist, der größer als der zweite Radius (R2) des zweiten axialen Teils (3) ist, wobei das Verhältnis zwischen dem ersten Radius und dem zweiten Radius zwischen 1 und 10 liegt.

13. Anordnung, insbesondere Filter für elektromagnetische Interferenzen, die Folgendes beinhaltet:
- den Kern (1) nach einem der vorhergehenden Ansprüche und
- mindestens einen elektrischen Leiter (10), insbesondere mindestens zwei elektrische Leiter, wobei der elektrische Leiter (10) mit dem ersten axialen Teil (2) des Kerns eine erste Spule und mit dem zweiten axialen Teil (3) des Kerns eine zweite Spule definiert, wobei die erste und die zweite Spule insbesondere in Reihe angeordnet sind.

14. Anordnung nach Anspruch 13, die exakt drei elektrische Leiter (10) beinhaltet, wobei der erste dieser drei elektrischen Leiter (10) ein erstes elektrisches Potenzial, insbesondere ein Potenzial von 48 V, aufweist, wobei der zweite dieser drei elektrischen Leiter (10) ein zweites elektrisches Potenzial, insbesondere ein Potenzial von 12 V, aufweist und der dritte dieser drei elektrischen Leiter (10) ein drittes elektrisches Potenzial aufweist und insbesondere eine elektrische Masse bildet.

15. Gleichspannungswandler, insbesondere ein 12 V/48 V-Wandler, der Folgendes beinhaltet:
- eine Vielzahl von Kommutierungszellen, die das Umwandeln von Spannung zwischen einem ersten Spannungspegel und einem zweiten Spannungspegel ermöglichen,
- einen elektrischen Verbinder für das Anschließen des Wandlers an ein Spannungsnetz mit dem ersten Spannungspegel und an ein Spannungsnetz mit dem zweiten Spannungspegel, wobei der Verbinder drei Kontakte beinhaltet, sodass die elektrische Potenzialdifferenz zwischen dem ersten und dem dritten Kontakt den ersten Spannungspegel definiert und sodass die elektrische Potenzialdifferenz zwischen dem zweiten und dem dritten Kontakt den zweiten Spannungspegel definiert, und
- die Anordnung nach den Ansprüchen 13 und 14, wobei diese Anordnung ein Filter für elektromagnetische Interferenzen bildet, das zwischen den Kommutierungszellen einerseits und dem elektrischen Verbinder andererseits eingefügt ist.

## Claims

1. Magnetic core (1) able to cooperate with at least one electrical conductor (10) in order to form coils, this core (1) extending axially and comprising:
- a first axial portion (2), the cooperation of which with the electrical conductor (10) forms a first coil, and
- a second axial portion (3), axially in the continuation of the first axial portion (2) and the cooperation of which with the electrical conductor (10) forms a second coil,
the second axial portion (3) being produced in one piece with the first axial portion (2), the first coil and the second coil being in particular in series, **characterized by** at least one cutout (5) being formed in the core in order to allow connection to the electrical conductor (10), so as to delimit the first coil from the second coil.

2. Core according to Claim 1, being able to cooperate with at least two electrical conductors in order to form coils,
the cooperation of the first axial portion (2) with each electrical conductor (10) forming a first coil, this first axial portion (2) defining for the magnetic field associated with each first coil a path allowing magnetic decoupling of these first coils, this path comprising:
- a common portion (20, 21), capable of being followed by the magnetic field associated with at least one other first coil, this common portion being without an air gap, and
- a portion (22) specific to this first coil, the magnetic field following this specific portion passing through at least one air gap specific to this first coil, the cooperation of the second axial portion (3) with each electrical conductor (10) forming a second coil, this second portion defining for the magnetic field associated with each coil a path allowing magnetic coupling of these second coils, this path also being followed in its entirety by the magnetic field associated with at least one other coil.

3. Magnetic core according to Claim 2, the first axial portion (2) comprising an outer envelope (20), an inner leg (21) and arms (22) linking the inner leg (21) and the outer envelope (20) .

4. Core according to Claim 3, the axial end of the outer envelope (20) facing the second axial portion (3) comprising a plurality of cutouts (5), each cutout (5) extending circumferentially and being made over less of the axial dimension of the outer shell (20).

5. Magnetic core according to Claim 3 or 4, a plurality of axial slots (8) being made through the outer envelope (20) in order to define the air gaps specific to the coils.

6. Core according to Claims 4 and 5, each slot (8) communicating with a cutout (5), in particular in order to provide a discontinuity of material in the outer envelope over the entire axial dimension of this outer envelope (20).

7. Core according to any one of Claims 3 to 6, all of the first coils having their associated respective magnetic field having at least one field line flowing through the inner leg (21), two first coils having their associated respective magnetic field having at least one field line flowing through the same linking arm (22), and each region of the outer envelope (20) delimited between two successive linking arms (22) being dedicated to one or more field lines of the magnetic field associated with a single first coil.

8. Core according to any one of Claims 3 to 7, the first axial portion (2) forming a cylinder of first radius (R1) , and the axis of which is that of the core (X), the outer envelope (20) defining the outer surface of this cylinder, the inner leg (21) extending along the axis of this cylinder, and each linking arm (22) being oriented radially with respect to this axis of the cylinder.

9. Core according to any one of the preceding claims, the second axial portion (3) being formed by a hollow sleeve (30).

10. Core according to Claim 9, the hollow sleeve (30) extending continuously without a cutout around the axis (X) of the core.

11. Core according to Claim 9 or 10, the hollow sleeve (30) being a cylinder of second radius (R2) and the axis of which is the axis (X) of the core.

12. Core according to Claims 8 and 11, the first axial portion (2) having a first radius (R1) greater than the second radius (R2) of the second axial portion (3), the ratio of the first radius to the second radius being between 1 and 10.

13. Assembly, in particular electromagnetic interference filter, comprising:
- the core (1) according to any one of the preceding claims, and
- at least one electrical conductor (10), in particular at least two electrical conductors, the electrical conductor (10) defining with the first axial portion (2) of the core a first coil, and with the second axial portion (3) of the core a second coil, the first and the second coil being in particular in series.

14. Assembly according to Claim 13, comprising exactly three electrical conductors (10), the first of these three electrical conductors (10) having a first electrical potential, in particular a potential of 48 V, the second of these three electrical conductors (10) having a second electrical potential, in particular a potential of 12 V, and the third of these three electrical conductors (10) having a third electrical potential, forming in particular an electrical ground.

15. DC-to-DC voltage converter, in particular 12 V-to-48 V converter, comprising:
- a plurality of switching cells, allowing voltage conversion between a first voltage level and a second voltage level,
- an electrical connector for connecting the converter to a voltage network at the first voltage level and to a voltage network at the second voltage level, the connector comprising three contacts, such that the difference in electrical potential between the first and the third contact defines the first voltage level and that the difference in electrical potential between the second and the third contact defines the second voltage level, and
- the assembly according to Claims 13 and 14, this assembly forming an electromagnetic interference filter interposed between the switching cells on the one hand and the electrical connector on the other hand.
